# EUROPÄISCHE PATENTSCHRIFT

(11) **EP 4 111 161 B1**
(45) Veröffentlichungstag und Bekanntmachung des Hinweises auf die Patenterteilung: **27.11.2024**
(21) Anmeldenummer: 20719163.6
(22) Anmeldetag: 09.04.2020
(51) Int. Cl.: G01N 1/28, B02C 17/00, B01F 31/441, B01F 33/25, B01F 33/452, G01N 1/38

(54) **ASBESTPROBEN-ANALYSENVORBEREITUNG**
ASBESTOS SAMPLE PREPARATION
PRÉPARATION DES ÉCHANTILLONS D'AMIANTE

(43) Veröffentlichungstag der Anmeldung: 04.01.2023
(73) Patentinhaber: ANALYSIS Lab SA, 2504 Biel/Bienne (CH)
(72) Erfinder: DUTOIT, Thierry, 2503 Biel/Bienne (CH)
(74) Vertreter: Keller Schneider Patent- und Markenanwälte AG
(86) Internationale Anmeldenummer: PCT/EP2020/060233
(87) Internationale Veröffentlichungsnummer: WO 2021/204397

(56) Entgegenhaltungen:
- WO-A1-2012/046089
- US-A1- 2014 370 610
- US-A1- 2019 134 583
- US-B1- 6 632 662
- US-B2- 9 333 471
- R. L. PERKINS ET AL: "Method for the Determination of Asbestos in Bulk Building Materials EPA/600/R-93/116", 1 July 1993 (1993-07-01), U.S. Enviromental Protection Agency Research Triangle Park, NC 27709, XP055757326, Retrieved from the Internet <URL:https://www.nist.gov/system/files/documents/nvlap/EPA-600-R-93-116.pdf> [retrieved on 20201207]
- TABATA MASAAKI ET AL: "Decomposition of asbestos by a supernatant used for immobilization of heavy metals in fly ash", JOURNAL OF MATERIAL CYCLES AND WASTE MANAGEMENT, SPRINGER JAPAN, TOKYO, vol. 18, no. 3, 6 April 2016 (2016-04-06), pages 483 - 492, XP035990572, ISSN: 1438-4957, [retrieved on 20160406], DOI: 10.1007/S10163-016-0491-2

## Beschreibung

Die Erfindung betrifft Asbestproben-Vorbereitungsverfahren zur Asbestanalyse einer möglicherweise Asbest enthaltenden Rohmaterialprobe. Weiter betrifft die Erfindung ein Verfahren zur Asbestanalyse einer möglicherweise Asbest enthaltenden Roh-Materialprobe, insbesondere zur qualitativen Asbestanalyse einer möglicherweise Asbest enthaltenden Roh-Materialprobe.

### Stand der Technik

Asbest ist eine Sammelbezeichnung für verschiedene faserförmige kristallisierte Silikat-Minerale. Darunter fallen Fasern des Magnesioriebecl<its respektive I<rol<ydoliths, die Fasern des Chrysotils. Weitere zum Asbest zählende Minerale sind Grunerit (Amosit, Brauner Asbest), Anthophyllit und AI<tinolith.

Aufgrund der grossen Festigkeit, Hitze- und Säurebeständigkeit, der hervorragenden Dämmeigenschaften und da die Asbestfasern zu Garnen versponnen und diese verwebt werden können wurde Asbest im grossen Stil in der Werftindustrie für die Schifffahrt, in der Wärmedämmung, der Bauindustrie, der Autoreifenindustrie und für Textilien im Bereich des Arbeitsschutzes und der Filtration eingesetzt. Insbesondere Chrysotil, auch Weißasbest genannt, wurde grosstechnisch als Armierungsfaser in Asbestzement eingesetzt und findet sich noch heute in der Bausubstanz vieler Gebäude.

Aufgrund der inzwischen eindeutig festgestellten Gesundheitsgefahren, die von Asbest ausgehen, ist der Einsatz heute in vielen Staaten verboten.

Heute steht meist die Entsorgung des Asbests im Vordergrund. Bei Umbauarbeiten oder Abbrucharbeiten ist besondere Vorsicht mit dem Umgang mit Asbestfasern geboten. Die Identifikation von Asbestfasern, zum Beispiel auf einer Baustelle, ist nicht trivial. Typischerweise müssen bei einem Verdachtsfall Rohmaterialproben des Bauschutts an ein Labor gesandt werden, wo diese auf das Vorhandensein von Asbestfasern untersucht werden.

Die Analyse der Rohmaterialproben durch ein Labor ist zeitaufwendig. Einerseits muss die Probe entnommen und an das Labor gesandt werden. Dort muss die Analyse durchgeführt werden und schliesslich die Resultate wiederum an den Auftraggeber zurück gesandt werden. Auf einer Baustelle, insbesondere in den betroffenen Bereichen, werden typischerweise während dieser Zeit die Arbeiten eingestellt. Erst nach Erhalt der Resultate kann dann entschieden werden, ob die Arbeiten ohne Risiko weiter geführt werden können, oder ob eine aufwändige und teure Entsorgung unter Einhaltung der Vorgaben bei asbesthaltigen Baustoffen durchgeführt werden muss.

Der Auftraggeber ist daher auf eine rasche Rückmeldung des Labors angewiesen, so dass der Betrieb auf der Baustelle möglichst nur kurzzeitig unterbrochen werden muss.

Die zu untersuchenden Rohmaterialproben stammen natürlich nicht ausschliesslich von Baustellen im Bereich von Gebäuden, sondern können auch zum Beispiel bei einer Generalüberholung eines auf einer Werft befindlichen Schiffs oder einer technischen Anlage aus der Industrie etc. stammen. Auch in diesen Bereichen ist eine rasche Rückmeldung des Labors und damit eine schnelle Analyse der Rohmaterialproben von grossem Vorteil.

Verfahren zur Analyse von Asbestproben sind allgemein bekannt. Grundsätzlich wird die Rohmaterialprobe in einem ersten Schritt in einem Asbestproben-Vorbereitungsverfahren derart aufgeschlossen, dass in einem zweiten Schritt allfällige Asbestfasern unter einem Mikroskop identifiziert werden können.

Für die Asbestproben-Vorbereitungsverfahren ist zum Beispiel bekannt, die Rohmaterialprobe vorab bei rund 400 °C zu verbrennen und anschliessend zu pulverisieren, insbesondere zum Beispiel in einem Mörser. Anschliessend wird die pulverisierte Probe in einer Flüssigkeit suspendiert. Die Suspension wird durch einen Filter filtriert und die Rückstände auf dem Filter werden unter dem Mikroskop analysiert.

In der R. L. Perkins et al ("Method for the Determination of Asbestos in Bulk Building Materials EPA/600/R-93/116", i. Juli 1993 (1993-07-01), U.S. Enviromental Protection Agency Research Triangle Park, NC 27709) wird weiter ein Verfahren zur Asbestanalyse in Baustoffen offenbart, bei welchem in der Probenvorbereitung die Probe Homogenisiert wird. Die Homogenisierung umfasst die Verwendung von verschiedenen Vorrichtungen, wie zum Beispiel einen Mörser, eine Mühle, einen Mixer zum pulverisieren, disaggregieren und mixen von heterogenem, mürbem Schüttgut. Anschliessend erfolgt eine Veraschung oder eine Säureauflösung. US2014/370610A1 betrifft ein Asbestprobenherstellungsverfahren, bei dem die Rohmaterialien zunächst mit Wasser und Säure vor dem Mahlen verdaut werden.

Das bekannte Verfahren hat den Nachteil, dass es sehr zeitaufwendig ist. Weiter müssen besondere Vorkehrungen für die Bearbeitungsschritte vorgesehen sein, um die Arbeiter im Labor wirksam gegen die Asbestfasern zu schützen.

### Darstellung der Erfindung

Aufgabe der Erfindung ist es, eine dem eingangs genannten technischen Gebiet zugehörendes Asbestproben-Vorbereitungsverfahren zu schaffen, welche besonders effizient und sicher ist.

Die Lösung der Aufgabe ist durch die Merkmale des Anspruchs 1 definiert. Gemäss der Erfindung wird die Roh-Materialprobe zum Aufschliessen von Asbestfasern in einem Probenaufnahmebehälter mit einer Flüssigkeit versetzt und einem Bearbeitungsprozess unterworfen, womit die Roh-Materialprobe in der Flüssigkeit suspendiert wird.

Gegenüber den bekannten Asbestproben-Vorbereitungsverfahren wird damit ein signifikanter Zeitgewinn damit erreicht, dass die Rohmaterialprobe ohne Vorbehandlung direkt in einem Probenaufnahmebehälter mit einer Flüssigkeit versetzt wird. Damit werden im Prinzip der Schritt des Verbrennens bei 400 °C, der Schritt des Mörserns der Rohmaterialprobe sowie allenfalls weitere im Stand der Technik vorgesehene Vorbehandlungen ausgelassen. Einerseits wird damit ein grosser Zeitgewinn erreicht. Anderseits wird damit auch die Sicherheit gegenüber dem Laborpersonal verbessert, da durch das sofortige Versetzen mit der Flüssigkeit eine asbesthaltige Staubbildung weitgehend vermieden werden kann.

Das erfindungsgemässe Asbestproben-Vorbereitungsverfahren basiert darauf, dass die Rohmaterialprobe direkt in den Probenaufnahmebehälter gegeben wird und mit einer Flüssigkeit bedeckt wird, ohne dass vorgängig eine Bearbeitung der Rohmaterialprobe erfolgt. Durch das Suspendieren der Rohmaterialprobe in der Flüssigkeit können die Asbestfasern aufgeschlossen respektive freigesetzt werden, so dass diese schliesslich in einem Analysenschritt, insbesondere unter einem Mikroskop, identifiziert werden können.

Die Rohmaterialprobe umfasst in der Regel Bruchstücke von Beton, Fliesenkleber, Dämmmaterial etc. Es kann sinnvoll sein, die Bruchstücke vor dem Asbestproben-Vorbereitungsverfahren zu sichten, um allenfalls Elemente daraus zu entfernen, welche offensichtlich keine Asbestfasern enthalten, so zum Beispiel Holz, Glas, Fliesen und weiteres. Falls die Probe mehrere inhomogene Teile umfasst, kann dem Asbestproben-Vorbereitungsverfahren auch eine Auswahl von einzelnen Bruchstücken vorangehen. Dieses Aussortieren und Selektionieren von Bruchstücke kann vorgängig zum Asbestproben-Vorbereitungsverfahren vorgesehen sein und wird vorliegend nicht als Bearbeitung der Rohmaterialprobe verstanden.

Unter dem Begriff "Suspendieren" respektive "Suspension" wird eine Mischung aus einer Flüssigkeit und Feststoffen verstanden. Es wird nicht unterschieden zwischen grobdispersen, feindispersen oder gar molekulardispersen Mischungen, all diese Bereiche sind durch den Begriff "Suspension" gleichermassen abgedeckt. Aufgrund der Rohmaterialprobe kann es sein, dass sich gewisse Bestandteile der Rohmaterialprobe durch den Bearbeitungsprozess nicht zerkleinern lassen und damit zum Beispiel Metallrücl<stände, Holzstücke etc. in einer Grössenordnung vorliegen, welche ausserhalbe des Begriffs "Suspension" liegen kann - solche Fälle sind jedoch nicht die Regel, da entsprechende Bestandteile bei der Selektion der Bruchstücke eigentlich entfernt werden müssten. Aber auch wenn der Fall eintreten sollte, wird dies vorliegend ebenso unter dem Begriff Suspension subsummiert, da die wesentlichen Bestandteile der Rohmaterialprobe, welche potentiell Asbestfasern enthalten könnten, während des Bearbeitungsprozesses suspendiert werden.

Das Asbestproben-Vorbereitungsverfahren setzt dann ein, wenn entschieden ist, welche Bruchstücke der erhaltenen Probe schliesslich auf Asbestfasern analysiert werden sollen.

Typische Bruchstücke umfassen zum Beispiel Fliesenkleber, Fensterl<itt, Vinylbodenkleber, Isolationsmaterial etc.

Das Asbestproben-Vorbereitungsverfahren dient als Vorbereitung der möglicherweise Asbest enthaltenden Rohmaterialprobe für eine anschliessende Analyse.

Entsprechend umfasst ein Verfahren zur Asbestanalyse einer möglicherweise Asbest enthaltenden Roh-Materialprobe, insbesondere zur qualitativen Asbestanalyse einer möglicherweise Asbest enthaltenden Roh-Materialprobe vorzugsweise ein solches Asbestproben-Vorbereitungsverfahren. Die Asbestanalyse erfolgt vorzugsweise qualitativ, insbesondere durch ein Begutachten unter einem geeigneten Mikroskop, wobei die Asbestfasern optisch identifiziert werden. Die Identifikation kann durch eine Fachperson oder mit einem geeigneten Computerprogramm durch eine Bildanalyse erfolgen. Auch wenn die Asbestanalyse vorzugsweise qualitativ durchgeführt wird, kann mit bekannten Techniken auch eine quantitative Analyse durchgeführt werden, zum Beispiel durch auszählen der Asbestfasern oder dergleichen. Dem Fachmann sind solche Verfahren bekannt.

Vorzugsweise läuft der Bearbeitungsprozess automatisch ab. Damit kann das Asbestproben-Vorbereitungsverfahren besonders effizient und kostengünstig ausgeführt werden. Insbesondere kann der Bearbeitungsprozess, in welchem die Rohmaterialprobe derart aufgeschlossen wird, dass allfällige Asbestfasern freigesetzt werden, besonders sicher durchgeführt werden, da kein Personal während des Aufschliessens der Rohmaterialprobe anwesend sein muss.

In Varianten kann der Bearbeitungsprozess auch teilweise oder ganz durch eine Person ausgeführt werden.

Bevorzugt umfasst der Bearbeitungsprozess ein Mischverfahren und/oder ein Mahlverfahren. Mit dem Mischverfahren und/oder dem Mahlverfahren kann die Rohmaterialprobe in einfacher Weise suspendiert werden. Hierzu sind dem Fachmann viele Techniken bekannt. Dadurch, dass das Mischverfahren und/oder das Mahlverfahren der Rohmaterialprobe in einer Flüssigkeit erfolgt, wird eine Kontamination des Personals weitgehend unterbunden. Die freigesetzten Asbestfasern werden typischerweise durch die Benetzung der Flüssigkeit in Suspension gehalten.

In Varianten kann statt eines Mischverfahrens und/oder eines Mahlverfahrens auch ein anderer Vorgang gewählt werden, um eine Suspendierung der Rohmaterialprobe in der Flüssigkeit zu erreichen. Zum Beispiel kann die Rohmaterialprobe auch in der Flüssigkeit mit einem Mörser bearbeitet werden. Dem Fachmann sind weitere geeignete Verfahren bekannt.

Vorzugsweise ist dem Probenaufnahmebehälter mindestens ein Mischkörper und/oder ein Mahlkörper zugesetzt, welcher während des Bearbeitungsprozesses in eine Relativbewegung zum Probenaufnahmebehälter versetzt wird. Mit einem Mischkörper und/oder einem Mahlkörper kann die Rohmaterialprobe im Probenaufnahmebehälter durch die Relativbewegung mechanisch beansprucht und damit zerkleinert werden. Solche Mischkörper und/oder Mahlkörper sind dem Fachmann bekannt.

In Varianten kann auf die Zugabe eines Mischkörpers und/oder Mahlkörpers auch verzichtet werden. In diesem Fall kann der Bearbeitungsprozess zum Beispiel auf einem Vortexer erfolgen. Weiter kann die Bearbeitung auch durch eine Rühr- und/oder Mischwerk, z.B. ein Mixer erfolgen, welches in den Probenaufnahmebehälter eingeführt wird. Dem Fachmann sind weitere Varianten bekannt.

Bevorzugt ist die Relativbewegung derart gewählt, dass in der Flüssigkeit eine turbulente Strömung erreicht wird. Damit kann ein Bearbeitungsprozess erreicht werden, bei welchem die Rohmaterialprobe besonders stark beansprucht wird und damit auch besonders effizient aufgeschlossen werden kann. Der Bearbeitungsprozess kann sowohl mit als auch ohne Mischkörper und/oder Mahlkörper erfolgen. In beiden Varianten können unterschiedliche, dem Fachmann bekannte Techniken zum Erreichen der Relativbewegung eingesetzt werden.

In Varianten kann die Relativbewegung auch derart gewählt sein, dass eine laminare Strömung erreicht ist. In diesem Fall kann eine optimale mechanisch Beanspruchung der Probe zum Beispiel durch die Wahl geeigneter Mahlkörper (z.B. mit einer rauen Oberfläche, kantigen Vorsprüngen, Schneiden etc.) erreicht werden.

Vorzugsweise wird der Bearbeitungsprozess mit einem Magnetrührer durchgeführt, wobei der Mischkörper und/oder der Mahlkörper mindestens ein Magnetrührelement umfasst. Mit dem Magnetrührer wird ein kostengünstiger und effizienter Bearbeitungsprozess ermöglicht. Insbesondere kann der Probenaufnahmebehälter, gegebenenfalls mit einer geeigneten Haltevorrichtung, auf dem Magnetrührer positioniert werden, während der Bearbeitungsprozess abläuft.

Unter dem Magnetrührelement wird ein Rührelement verstanden, welches geeignet ist, um von einem durch den Magnetrührer bewegten magnetischen Feld in Bewegung versetzt zu werden. Im Wesentlichen weist das Magnetrührelement die Funktion eines bekannten Magnetfisches auf, wobei insbesondere Material und Formen - sofern die Funktionalität gegeben ist - frei wählbar sind (siehe unten).

Der Magnetrührer wird vorzugsweise nicht ausschliesslich zum Rühren der Flüssigkeit verwendet, sondern zur mechanischen Bearbeitung der Rohmaterialprobe. Wie nachfolgend ausgeführt, können verschiedene Massnahmen ergriffen werden, um die mechanische Bearbeitung der Rohmaterialprobe, insbesondere das Zerkleinern der Rohmaterialprobe zu begünstigen. Die Massnahmen können einzeln oder in Kombination angewandt werden, um den

In Varianten können auch andere Techniken zum Erreichen der Relativbewegung vorgesehen sein. Zum Beispiel kann der Probenaufnahmebehälter mit einem Vortexer geschüttelt werden. Weiter können auch mehrere Probenaufnahmebehälter zusammen, in einem Rack oder dergleichen, mit einer Schüttelvorrichtung geschüttelt werden. Hierbei kann der Probenaufnahmebehälter wahlweise einen Mischkörper und/oder einen Mahlkörper aufweisen - dies ist jedoch nicht zwingend. Bruchstücke der Rohmaterialprobe können gegebenenfalls selbst auch als Mahlkörper und/oder Mischkörper fungieren. Schliesslich kann auf die Mahlkörper und/oder Mischkörper auch ganz verzichtet werden.

Bevorzugt umfasst die Oberfläche des mindestens einen Magnetrührelements Metall, insbesondere eine Metalllegierung, vorzugsweise Stahl. Dadurch wird eine besonders harte Oberfläche geschaffen, womit eine mechanische Beanspruchung der Rohmaterialprobe besonders effektiv erreicht werden kann.

In Varianten kann das mindestens eine Magnetrührelement auch eine Oberfläche aus Kunststoff, Glas oder anderen Stoffen umfassen.

In einer besonders bevorzugten Ausführungsform besteht die gesamte Oberfläche des mindestens einen Magnetrührelements aus einem Metall oder einer Metalllegierung, insbesondere aus Stahl. Besonders bevorzugt besteht das mindestens eine Magnetrührelement gesamthaft aus einem Metall oder einer Metalllegierung, insbesondere aus Stahl. Statt Stahl kann für das Magnetrührelement auch eine AlNiCo-Legierung (Aluminium-Nickel-Kobalt), Bismanol (Legierung aus Bismut, Mangan und Eisen), ein Ferrit, NdFeB (Neodym-Eisen-Bor), SmCo (Samarium-Kobalt) etc. ausgebildet sein. Insbesondere kann ein solches Magnetrührelement auch zusätzlich eine Beschichtung aus Kunststoff, Hartmetall etc. aufweisen. Dem Fachmann sind dazu viele Varianten bekannt, um einen Mischkörper und/oder Mahlkörper zu schaffen, mit welchem die Rohmaterialprobe besonders effizient aufgeschlossen werden kann.

Dem Fachmann ist klar, dass auch herkömmliche Magnetfische, welche als Laborbedarf hinreichend und in unterschiedlichen Ausführungsformen bekannt sind, eingesetzt werden können. Es kann allerdings von Vorteil sein, solche Magnetfische ohne die typische Beschichtung aus PTFE zu verwenden, um eine erhöhte Schlagkraft zu erreichen.

Im Einweg-Gebrauch wird jedoch für das Magnetrührelement vorzugsweise ein Material gewählt, welches hart, aber nicht spröde, und zugleich besonders kostengünstig ist, namentlich bevorzugt ein Stahl oder dergleichen. Insbesondere wenn die Mischkörper und/oder Mahlkörper mehrfach eingesetzt werden, können auch andere Materialien eingesetzt werden. Schliesslich kann es auch aufgrund der Leistungsfähigkeit, z.B. bei besonders harten Rohmaterialproben von Vorteil sein, ein anderes der oben aufgeführten Materialien für das Magnetrührelement zu wählen.

Besonders bevorzugt werden mindestens zwei Magnetrührelemente eingesetzt. Damit kann eine Schlagenergie zwischen den Magnetrührelementen ebenfalls zur Zerkleinerung der Rohmaterialprobe eingesetzt werden, womit ein effizienteres Verfahren zum Aufschliessen der Rohmaterialprobe erreicht wird. Grundsätzlich kann auch genau ein Magnetrührelement vorgesehen sein. Weiter können auch drei oder mehr Magnetrührelemente eingesetzt werden.

Bevorzugt umfasst das mindestens eine Magnetrührelement mindestens eine Kugel, vorzugsweise mindestens zwei Kugeln. In weiteren Varianten können auch mehr als zwei Kugeln vorgesehen sein. Die Kugeln haben den Vorteil, dass sie kostengünstig in der Herstellung sind und gute Mahleigenschaften aufweisen. Besonders bevorzugt umfasst das mindestens eine Magnetrührelement mindestens zwei Kugeln. Damit können während des Bearbeitungsprozesses Bruchstücke der Rohmaterialprobe besonders effizient zerkleinert werden. Die Zerkleinerung wird insbesondere dadurch begünstigt, dass die Bruchstücke sowohl zwischen den Kugeln als auch zwischen einer Kugel und der Wandung des Probenaufnahmebehälters zerschlagen werden können.

Vorzugsweise handelt es sich bei den Kugeln um Stahlkugeln. In Varianten können auch andere Materialien für die Kugeln vorgesehen sein. Besonders bevorzugt handelt es sich bei den Stahlkugeln um Vollmaterial. In Varianten können auch Hohlkugeln oder lediglich mit Stahl ummantelte Kugeln aus anderen Materialien vorgesehen sein. Weiter bevorzugt handelt es sich um unbeschichtete Stahlkugeln aus vollmaterial, welche besonders kostengünstig in der Herstellung sind. In Varianten können die Stahlkugeln auch zum Beispiel mit PTFE (Teflon) oder anderen Materialien beschichtet sein.

In Varianten kann das mindestens eine Magnetrührelement auch andere Formen als die Kugelform aufweisen, insbesondere kann eine Stabform, welche bei Magnetrührstäbchen bekannt sind etc. vorgesehen sein.

Vorzugsweise weisen die Kugeln einen Durchmesser zwischen 3 und 15 mm, insbesondere zwischen 4 und 8 mm auf. In Varianten können die Kugeln auch einen Durchmesser von weniger als 3 mm oder von mehr als 15 mm aufweisen.

Bevorzugt ist der Probenaufnahmebehälter während des Bearbeitungsprozesses zu einem Rotationszentrum des Magnetrührers exzentrisch angeordnet. Damit wird eine in besonderem Masse ungeordnete Bewegung des mindestens einen Magnetrührelements erreicht, womit wiederum ein Bearbeitungsprozess erreicht wird, bei welchem die Rohmaterialprobe in der Flüssigkeit besonders effizient zerkleinert werden kann.

In der herkömmlichen Anordnung eines Probenaufnahmebehälters auf einem Magnetrührer wird der Probenaufnahmebehälter zentral auf dem Rotationszentrum des Magnetrührers platziert. Typische Behälter, welche im Einsatz mit Magnetrührer verwendet werden, sind Bechergläser. Diese weisen typischerweise eine zentrale Erhebung auf, so dass ein Magnetrührstäbchen möglichst reibungsfrei und störungsfrei synchron mit dem Antriebsmotor des Magnetrührers rotieren kann. In der Flüssigkeit bildet sich damit eine Trombe, womit die Durchmischung erreicht wird. Beim vorliegenden Bearbeitungsprozess kann im Prinzip dieselbe Anordnung auch vorgesehen sein. Eine bessere Bearbeitung kann jedoch erreicht werden, wenn die obig beschriebene exzentrische Anordnung gewählt wird, da damit eine ungeordnete Bewegung des Magnetrührelements erreicht werden kann, womit die Rohmaterialprobe effizienter zerkleinert und allfällige Asbestfasern in der Flüssigkeit freigesetzt werden können.

Während des Bearbeitungsprozesses können auch mehr als ein Probenaufnahmebehälter exzentrisch um eine Rotationsachse des Magnetrührers angeordnet sein. Damit kann das Verfahren effizient und kostengünstig durchgeführt werden.

Vorzugsweise umfasst dazu der Magnetrührer einen Magneten, welcher um die Rotationsachse rotiert, wobei der Magnet und der Probenaufnahmebehälter derart zueinander angeordnet sind, dass während der Rotation des Magneten - insbesondere zumindest zu einem Zeitpunkt respektive in sich wiederholenden zeitlichen Abständen, vorzugsweise jedoch während des gesamten Bearbeitungsprozesses - ein Zentrum des Probenaufnahmebehälters ausserhalb einer Mitte zwischen einem Nordpol und einem Südpol des Magneten liegt. Damit wird eine unkontrollierte Bewegung des mindestens einen Magnetrührelements erreicht, womit wiederum ein optimaler Bearbeitungsprozess ermöglicht wird, bei welchem die Rohmaterialprobe derart bearbeitet wird, dass allfällig vorhandene Asbestfasern freigesetzt werden können.

In Varianten kann der Probenaufnahmebehälter auch derart zum Magneten angeordnet sein, dass das Zentrum des Probenaufnahmebehälters während der Relativbewegung konstant zwischen dem Nordpol und dem Südpol des Magneten liegt. Dies entspräche der zur Rotationsachse zentralen Anordnung eines Behälters auf einem herkömmlichen Magnetrührer.

Vorzugsweise weist der Probenaufnahmebehälter einen gewölbten Boden oder einen konischen Boden auf. Bei einem gewölbten Boden respektive einem konischen Boden wird weiterhin eine gleichmässige Rotation des Magnetrührelements verhindert, insbesondere wenn der Probenaufnahmebehälter exzentrisch zur Rotationsachse des Magneten des Magnetrührers angeordnet ist. Weiter hat der gewölbte oder konische Boden den Vorteil, dass auch geringe Volumina effizient durchmischt/gemahlen werden können.Gegenüber Probenaufnahmebehälter mit flachem Boden besteht der Vorteil, dass sich die Rohmaterialprobe nicht im Kantenbereich ansammeln kann, womit das Aufschliessen der Rohmaterialprobe behindert würde. Ein weiterer Vorteil besteht darin, dass der Bearbeitungsprozess auch mit geringen Mengen einer Rohmaterialprobe durchgeführt werden kann, insbesondere weil zur Analyse der Rohmaterialprobe auf Asbestfasern bereits kleinste Mengen ausreichen. Die Menge kann zum Beispiel weniger als 1 g umfassen. Durch den gewölbten respektive konischen Boden kann die Rohmaterialprobe mit einem relativ geringen Volumen der Flüssigkeit versetzt werden, so dass die allfällig vorhandenen Asbestfasern mit möglichst hoher Konzentration vorliegen. Ein Flüssigkeitsvolumen kann zum Beispiel 2 mL umfassen.

In Varianten können auch Probenaufnahmebehälter mit flachem Boden eingesetzt werden.

Vorzugsweise ist der Probenaufnahmebehälter derart dimensioniert, dass er im Bereich der des gewölbten Bodens respektive des konischen Bodens ein Volumen zwischen 1 mL und 5 mL, insbesondere zwischen 2 mL und 3 mL aufnehmen kann. In der bevorzugten Ausführungsform des Asbestproben-Vorbereitungsverfahren wird die Rohmaterialprobe derart bemessen, dass sie innerhalb dieses gewölbten respektive konischen Bodens aufgenommen werden kann und insbesondere mit der Flüssigkeit bedeckt werden kann. Damit kann die Misch- und Mahlwirkung optimiert werden. Im Bereich der Wölbung respektive des Konus wird mit dem mindestens einen Magnetrührelement eine besonders hohe Schlagenergie erreicht, so dass dort die Misch- respektive Mahlleistung besonders hoch ist.

In Varianten kann der Probenaufnahmebehälter auch mehr oder weniger stark befüllt werden.

Vorzugsweise wird die Roh-Materialprobe im Probenaufnahmebehälter derart mit einem minimalen Volumen der Flüssigkeit versetzt, dass in der aufrechten Ruhelage des Probenaufnahmebehälters die Rohmaterialprobe mit der Flüssigkeit bedeckt ist. Dem Fachmann ist klar, dass das bedecken der Rohmaterialprobe mit der Flüssigkeit in der Praxis nicht exakt ausgeführt werden muss. Unter minimalem Volumen wird vorliegend ein Volumen verstanden, bei welchem weniger als 50 Y, vorzugsweise weniger als 20 Y, insbesondere weniger als 10 Y des Gesamtvolumens der Flüssigkeit oberhalb der höchsten Erhebung der Rohmaterialprobe im aufrecht stehenden Probenaufnahmebehälter liegt. Damit wird weitgehend verhindert, dass sich allfällig vorhandene Asbestfasern während des Bearbeitungsprozesses aus dem Probenaufnahmebehälter austreten können und anderseits wird sichergestellt, dass der Bearbeitungsprozess effizient abläuft. Ein kleines Flüssigkeitsvolumen ist von Vorteil, da so das Magnetrührelement die Rohmaterialprobe effizienter zerkleinern kann.

In Varianten kann das Flüssigkeitsvolumen auch geringer bemessen sein, so dass die Rohmaterialprobe nicht bedeckt ist, insbesondere wenn der Probenaufnahmebehälter während des Bearbeitungsprozesses verschlossen ist. Anderseits kann das Flüssigkeitsvolumen auch um mehr als 50 Y des Volumens der Flüssigkeit über der höchsten Erhebung der Rohmaterialprobe liegen.

In der Praxis kann zum Beispiel die Rohmaterialprobe im Probenaufnahmebehälter nach Augenmass mit der Flüssigkeit derart versetzt werden, dass die Rohmaterialprobe mit der Flüssigkeit knapp bedeckt ist. Anderseits kann auch die Befüllung des Probenaufnahmebehälters derart vorgegeben sein, dass ein Pegel nicht überschritten wird. Damit kann ein vordefiniertes Volumen der Flüssigkeit in den Probenaufnahmebehälter, insbesondere auch automatisch, zugegeben werden.

Vorzugsweise umfasst die Flüssigkeit eine matrixlösende Komponente. Damit können die allfällig vorhandenen Asbestfasern effizienter freigesetzt werden. Durch den Bearbeitungsprozess werden die lösbaren Komponenten aufgelöst, womit die allfällig vorhandenen Asbestfasern effizienter freigesetzt werden können. Damit kann die Zeitdauer des Bearbeitungsprozesses signifikant verringert werden. Bei I<all<haltiger Matrix kann zum Beispiel die Flüssigkeit zum Beispiel eine Säure und bei Kunststoff aufweisender Matrix zum Beispiel ein organisches Lösemittel, wie zum Beispiel Aceton eingesetzt werden.

In Varianten kann auf die matrixlösende Komponente auch verzichtet werden.

Vorzugsweise umfasst die Flüssigkeit eine Oberflächenspannung senkende Komponente. Durch die geringe Oberflächenspannung kann eine bessere Benetzung der Rohmaterialprobe erreicht werden, womit wiederum ein allfälliger Auflöseprozess der Matrix begünstigt werden kann.

In Varianten kann auf die Oberflächenspannung senkende Komponente auch verzichtet werden.

Um das Bearbeitungsverfahren besonders effizient durchführen zu können, ist es von Vorteil, wenn ein optimierter Magnetrührer eingesetzt wird. Dieser umfasst einen motorisch antreibbaren Rotor mit einer Rotationsachse und mit mindestens einem am Rotor befestigten Magneten, mit einem Südpol und einem Nordpol. Der Magnetrührer umfasst weiter mindestens eine Behälteraufnahme, welche exzentrisch zur Rotationsachse angeordnet ist, wobei insbesondere eine Verbindungslinie zwischen dem Südpol und dem Nordpol die Rotationsachse schneidet. Unter der Verbindungslinie zwischen dem Südpol und dem Nordpol ist eine beliebige Verbindungslinie zu verstehen, welche das Kriterium erfüllt. Der Magnetrührer umfasst vorzugswiese einen Elektromotor, womit der Rotor angetrieben wird. In Varianten können auch mehrere Magnetrührer über einen gemeinsamen Antrieb, insbesondere einen Elektromotor verfügen, um mehrere Rotoren anzutreiben.

Der Magnetrührer ist, unabhängig von der obigen Definition, vorzugsweise derart ausgebildet, dass ein Magnetstab respektive Magnetfisch in der Ruhelage zentral zur Rotationsachse des motorisch antreibbaren Rotors ausgerichtet ist.

In einer bevorzugten Ausführungsform umfasst der Magnetrührer genau einen Magneten. In diesem Fall ist der genau eine Magnet vorzugsweise derart angeordnet, dass die Rotationsachse mittig zwischen dem Südpol und dem Nordpol liegt.

In Varianten kann der Magnetrührer auch mehrere, insbesondere sternförmig angeordnete Magnete umfassen, so dass der Magnetstab respektive der Magnetfisch mehrere, um einen Winkel versetzte Lagen einnehmen kann, bei welchen jeweils die Rotationsachse mittig zwischen dem Südpol und dem Nordpol liegt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen schematischen Ablauf des Asbestproben-Vorbereitungsverfahren;
- Fig. 2: eine schematische Darstellung einer Draufsicht auf einen Magnetrührer zur Verwendung im Asbestproben-Vorbereitungsverfahren; und
- Fig. 3: eine schematische Schnittdarstellung parallel zur Antriebswelle des Magnetrührers gemäss Figur 2, durch die Aufnahme für den Probenaufnahmebehälter.
Grundsätzlich sind in den Figuren gleiche Teile mit gleichen Bezugszeichen versehen.

### Wege zur Ausführung der Erfindung

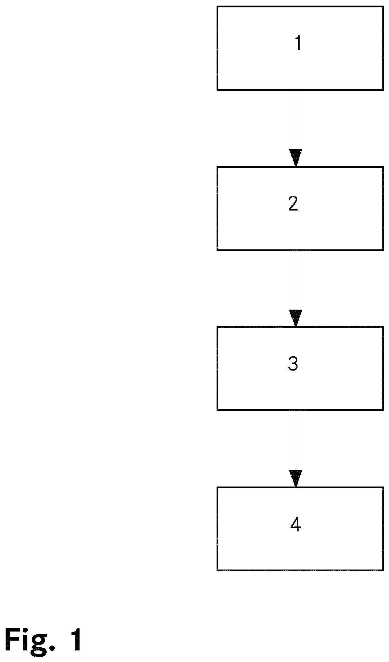

Das Asbestproben-Vorbereitungsverfahren umfasst in der vorliegenden Ausführungsform, mit Bezugnahme auf die Figur 1, die folgenden Schritte:
1. Im Schritt 1 wird ca. 1 Gramm einer Rohmaterialprobe in einen Probenaufnahmebehälter gegeben. Dieser Schritt wird typischerweise direkt bei der Probenentnahme vor Ort ausgeführt, zum Beispiel auf einer Baustelle. Damit werden vermeidbare Zwischenschritte vermindert, womit eine Kontaminationsgefahr Dritter durch die Rohmaterialprobe vermindert wird. Insgesamt wird damit das Analyseverfahren sicherer gestaltet. Beim Probenaufnahmebehälter handelt es sich um ein Reagenzröhrchen aus Kunststoff, welches einen konischen Bodenbereich umfasst. Der Konus umfasst vorliegend ein Volumen von 3 mL.
2. Im Schritt 2 wird die Rohmaterialprobe mit der Flüssigkeit versetzt. Im vorliegenden Beispiel handelt es sich bei der Rohmaterialprobe um eine gipshaltige Probe, das heiss, das Matrixmaterial umfasst Gips. Daher wird als Flüssigkeit eine verdünnte Salzsäure verwendet. Damit wird während des nachfolgenden Bearbeitungsprozesses der Gips aufgelöst, womit allfällig vorhandene Asbestfasern freigesetzt werden können. Vorliegend werden rund 2 mL der verdünnten Salzsäure zugesetzt, so dass die Rohmaterialprobe mit der Salzsäure bedeckt ist. Damit erreicht der Flüssigkeitspegel ungefähr das obere Ende des Konus.
3. Im Schritt 3 werden dem Probenaufnahmebehälter zwei Stahlkugeln als Mischrespektive Mahlkörper zugegeben. Die beiden Stahlkugeln weisen jeweils einen Durchmesser von 6 mm auf.
4. Im Schritt 4 wird der Probenaufnahmebehälter exzentrisch zu einem Rotationszentrum eines Magnetrührers angeordnet und gerührt.

Nach Abschluss des Schritts 4 ist nun die Rohmaterialprobe weitgehend aufgeschlossen und die allfällig vorhandenen Asbestfasern sind freigesetzt. Die weiteren Schritte zur Analyse umfassen typischerweise eine Filtration und eine Untersuchung des Filtrates unter einem Mikroskop (Lichtmikroskop, Rasterelektronenmikroskop etc.).

Dazu wird die Rohmaterialprobe mit Wasser und Aceton in eine Suspension überführt, die Suspension wird filtriert und der Filterkuchen mit Aceton nachgespült und getrocknet. Mit einer Kohlenstoff-Klebefläche wird vom Filter eine Probe entnommen und optisch (mikroskopisch) auf das Vorhandensein von Asbestfasern untersucht.

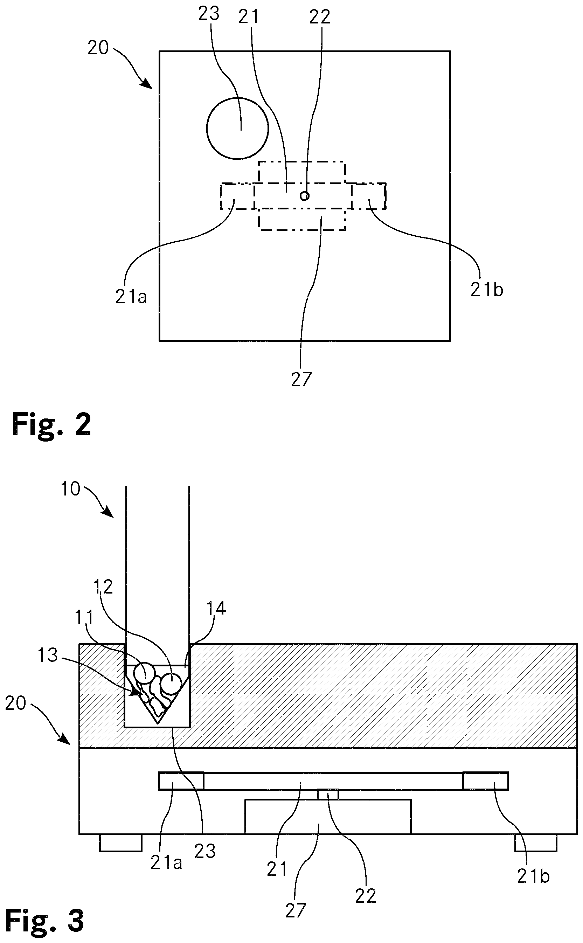

Die Figur 2 zeigt eine schematische Darstellung einer Draufsicht auf einen Magnetrührer 20 zur Verwendung im Asbestproben-Vorbereitungsverfahren. Der Magnetrührer 20 umfasst ein Gehäuse, in welchem elektrischer Antrieb 27 angeordnet ist. Der elektrische Antrieb umfasst eine Antriebswelle 22, auf welcher ein Magnetstab 21 befestigt ist. Der Magnetstab 21 umfasst an gegenüberliegenden Enden einen magnetischen Südpol 21a und einen magnetischen Nordpol 21b. Durch die Aktivierung des elektrischen Antriebs wird der Magnetstab 21 in eine Rotation um die Antriebswelle 22 versetzt, so dass der magnetischen Südpol 21a und der magnetischen Nordpol 21b jeweils eine Kreisbewegung beschreiben.

Das Gehäuse des Magnetrührers 20 umfasst weiter eine Aufnahme 23zur Aufnahme eines Probenaufnahmebehälters. Die Aufnahme 23ist zur Antriebswelle 22 beabstandet angeordnet. Es können auch mehrere Aufnahmen vorgesehen sein, dies ist abhängig von der Dimensionierung des Magnetrührers 20 und des Magnetstabes 21.

Wird nun der elektrische Antrieb 27 aktiviert, rotiert der Magnetstab 21 so, dass bei der Aufnahme 23alternierend der Südpol 21a und der Nordpol 21b vorbeikommt, um das Magnetrührelement im Probenaufnahmebehälter (hier nicht dargestellt) in Bewegung zu versetzen. Durch diese Anordnung wird eine besonders effiziente Zerkleinerung der Rohmaterialprobe erreicht.

Eine Magnetrührer kann auch mehr als einen Antrieb mit jeweils z.B. zwei, drei, vier oder mehr, um die Antriebswelle angeordnete Aufnahmen aufweisen. Zum Beispiel kann ein Magnetrührer vier, acht oder mehr Antriebe umfassen. Weiter kann ein Magnetrührer mehrere Antriebswellen aufweisen, welche durch einen einzigen Antrieb angetrieben sind.

Die Figur 3 zeigt einen eine schematische Schnittdarstellung parallel zur Antriebswelle 22 des Magnetrührers 20 gemäss Figur 2, durch die Aufnahme 23, in welche ein Probenaufnahmebehälter 10 eingesetzt ist.

Der Magnetrührer umfasst ein Gehäuse mit einem elektrischen Antrieb 27, welcher eine Welle 22 antreibt, an welcher der Magnetstab 21 mit den gegenüberliegenden Südpol 21a und Nordpol 21b befestigt ist. Oberhalb des Magnetstabs 21 ist die Aufnahme 23 in der Schnittdarstellung ersichtlich. Die Aufnahme 23 ist als Bohrung in einem Block aus Kunststoff ausgebildet. Die Bohrung ist vorliegend als Sackloch dargestellt, kann aber auch als Durchgehende Bohrung vorgesehen sein.

In der Aufnahme 23 befindet sich ein Probenaufnahmebehälter 10, welcher einen konischen Boden aufweist. Im Konus des Probenaufnahmebehälters 10 befindet sich die Rohmaterialprobe 13 in Form von mehreren Bruchstücken. Zusätzlich befindet sich im Probenaufnahmebehälters 10 zwei Stahlkugeln 11 und 12. Das Flüssigkeitsniveau 14 steht knapp über dem Konus des Probenaufnahmebehälters 10. Durch Aktivierung des elektrischen Antriebs 27 wird der Magnetstab 21 in Rotation versetzt, womit die Stahlkugeln 11 und 12 in Bewegung versetzt werden. Durch die Impulse zwischen den Stahlkugeln 11 und 12 respektive zwischen den Stahlkugeln 11 und 12 und einer Wandung des Probenaufnahmebehälters, werden zwischenliegende Bruchstücke der Rohmaterialprobe zerkleinert, womit allfällig vorhandene Asbestfasern effizient freigesetzt werden können.

Dem Fachmann ist klar, dass die Stahll<ugeln auch durch andere Magnetrührelemente ersetzt werden können.

Zusammenfassend ist festzustellen, dass erfindungsgemäss ein Asbestproben-Vorbereitungsverfahren geschaffen wird, womit besonders effizient allfällig vorhandene Asbestfasern freigesetzt werden können, um diese optisch zu identifizieren. Das Verfahren ist zudem für die Anwender besonders sicher, da die Asbestfasern während des Verfahrens in einer Flüssigkeit vorliegen und nicht in Form von Staub oder ähnlichem austreten können.

## Patentansprüche

1. Asbestproben-Vorbereitungsverfahren zur Asbestanalyse einer möglicherweise Asbest enthaltenden Rohmaterialprobe (13) , **dadurch gekennzeichnet, dass** die Rohmaterialprobe (13) zum Aufschliessen von Asbestfasern in einem Probenaufnahmebehälter (1) mit einer Flüssigkeit versetzt wird (2) und wobei die Rohmaterialprobe (13) einem Bearbeitungsprozess (4) unterworfen wird, womit die Rohmaterialprobe (13) in der Flüssigkeit suspendiert wird.

2. Asbestproben-Vorbereitungsverfahren nach Anspruch 1, **dadurch gekennzeichnet, dass** der Bearbeitungsprozess (4) automatisch abläuft.

3. Asbestproben-Vorbereitungsverfahren nach Anspruch 1 oder 2, **dadurch gekennzeichnet, dass** der Bearbeitungsprozess (4) ein Mischverfahren und/oder ein Mahlverfahren umfasst.

4. Asbestproben-Vorbereitungsverfahren nach Anspruch 3, **dadurch gekennzeichnet, dass** dem Probenaufnahmebehälter 10 mindestens ein Mischkörper und/oder ein Mahlkörper (11) zugesetzt ist, welcher während des Bearbeitungsprozesses (4) in eine Relativbewegung zum Probenaufnahmebehälter (10) versetzt wird.

5. Asbestproben-Vorbereitungsverfahren nach Anspruch 4, **dadurch gekennzeichnet, dass** die Relativbewegung derart gewählt ist, dass in der Flüssigkeit eine turbulente Strömung erreicht wird.

6. Asbestproben-Vorbereitungsverfahren nach Anspruch 4 oder 5, **dadurch gekennzeichnet, dass** der Bearbeitungsprozess (4) mit einem Magnetrührer (20) durchgeführt wird, wobei der Mischkörper und/oder der Mahlkörper (11) mindestens ein Magnetrührelement umfasst.

7. Asbestproben-Vorbereitungsverfahren nach Anspruch 6, **dadurch gekennzeichnet, dass** die Oberfläche des mindestens einen Magnetrührelement Metall, insbesondere eine Metalllegierung, vorzugsweise Stahl umfasst.

8. Asbestproben-Vorbereitungsverfahren nach Anspruch 6 oder 7, **dadurch gekennzeichnet, dass** das mindestens eine Magnetrührelement mindestens eine Kugel, vorzugsweise mindestens zwei Kugeln umfasst.

9. Asbestproben-Vorbereitungsverfahren nach einem der Ansprüche 6 bis 8, **dadurch gekennzeichnet, dass** der Probenaufnahmebehälter (10) während des Bearbeitungsprozesses (4) zu einem Rotationszentrum des Magnetrührers (20) exzentrisch angeordnet ist.

10. Asbestproben-Vorbereitungsverfahren nach Anspruch 9, **dadurch gekennzeichnet, dass** der Magnetrührer (20) einen Magneten (21) umfasst, welcher um die Rotationsachse rotiert, wobei der Magnet (21) und der Probenaufnahmebehälter (10) derart zueinander angeordnet sind, dass während der Rotation des Magneten (21) ein Zentrum des Probenaufnahmebehälters (10) ausserhalb einer Mitte zwischen einem Nordpol (21b) und einem Südpol (21a) des Magneten (21) liegt.

11. Asbestproben-Vorbereitungsverfahren nach einem der Ansprüche 1 bis 10, **dadurch gekennzeichnet, dass** der Probenaufnahmebehälter (10) einen gewölbten Boden oder einen konischen Boden aufweist.

12. Asbestproben-Vorbereitungsverfahren nach einem der Ansprüche 1 bis 11, **dadurch gekennzeichnet, dass** die Rohmaterialprobe (13) im Probenaufnahmebehälter (10) derart mit einem minimalen Volumen der Flüssigkeit versetzt wird, dass in der aufrechten Ruhelage des Probenaufnahmebehälters (10) die Rohmaterialprobe (13) mit der Flüssigkeit bedeckt ist.

13. Asbestproben-Vorbereitungsverfahren nach einem der Ansprüche 1 bis 12, **dadurch gekennzeichnet, dass** die Flüssigkeit eine matrixlösende Komponente umfasst.

14. Asbestproben-Vorbereitungsverfahren nach einem der Ansprüche 1 bis 13, **dadurch gekennzeichnet, dass** die Flüssigkeit eine Oberflächenspannung senkende Komponente umfasst.

## Claims

1. Asbestos sample preparation method for the analysis of asbestos in a raw material sample (13) possibly containing asbestos, **characterised in that** the raw material sample (13) is treated with a liquid (2) in a sample container (1) is added (2) with a liquid and wherein the raw material sample (13) is subjected to a treatment process (4), whereby the raw material sample (13) is suspended in the liquid.

2. Asbestos sample preparation method according to claim 1, **characterised in that** the processing procedure (4) runs automatically.

3. Asbestos sample preparation method according to claim 1 or 2, **characterised in that** the processing procedure (4) comprises a mixing procedure and/or a grinding procedure.

4. Asbestos sample preparation method according to claim 3, **characterised in that** at least one mixing body and/or one grinding body (11) is added to the sample receiving container (10) and is set in relative motion to the sample receiving container (10) during the processing procedure (4).

5. Asbestos sample preparation method according to claim 4, **characterised in that** the relative movement is selected such that a turbulent flow is achieved in the liquid.

6. Asbestos sample preparation method according to claim 4 or 5, **characterised in that** the processing (4) is carried out with a magnetic stirrer (20), wherein the mixing body and/or the grinding body (11) comprises at least one magnetic stirring element.

7. Asbestos sample preparation method according to claim 6, **characterised in that** the surface of the at least one magnetic stirring element comprises metal, in particular a metal alloy, preferably steel.

8. Asbestos sample preparation method according to claim 6 or 7, **characterised in that** the at least one magnetic stirring element comprises at least one ball, preferably at least two balls.

9. Asbestos sample preparation method according to one of claims 6 to 8, **characterised in that** the sample receiving container (10) is arranged eccentrically to a centre of rotation of the magnetic stirrer (20) during the processing procedure (4).

10. Asbestos sample preparation method according to claim 9, **characterised in that** the magnetic stirrer (20) comprises a magnet (21) which rotates about the axis of rotation, the magnet (21) and the sample container (10) are arranged relative to each other such that, during rotation of the magnet (21), a centre of the sample receiving container (10) lies outside a centre between a north pole (21b) and a south pole (21a) of the magnet (21).

11. An asbestos sample preparation method according to any one of claims 1 to 10, **characterised in that** the sample receiving container (10) has a dished bottom or a conical bottom.

12. Asbestos sample preparation method according to one of claims 1 to 11, **characterised in that** the raw material sample (13) in the sample receiving container (10) is mixed with a minimal volume of liquid such that in the upright resting position of the sample receiving container (10) the raw material sample (13) is covered with the liquid.

13. Asbestos sample preparation method according to one of claims 1 to 12, **characterised in that** the liquid comprises a matrix-dissolving component.

14. Asbestos sample preparation method according to one of claims 1 to 13, **characterised in that** the liquid comprises a surface tension-reducing component.

## Revendications

1. Procédé de préparation d'échantillons d'amiante pour l'analyse d'amiante dans un échantillon de matière première (13) contenant probablement de l'amiante, **caractérisé en ce que**, pour décomposer des fibres d'amiante, l'on mélange (2) l'échantillon de matière première (13) avec un liquide dans un récipient collecteur d'échantillons (1) et l'échantillon de matière première (13) étant soumis à un processus de traitement (4), par lequel l'échantillon de matière première (13) est mis en suspension dans le liquide.

2. Procédé de préparation d'échantillons d'amiante selon la revendication 1, **caractérisé en ce que** le processus de traitement (4) se déroule automatiquement.

3. Procédé de préparation d'échantillons d'amiante selon la revendication 1 ou 2, **caractérisé en ce que** le processus de traitement (4) comprend un processus de mélange et / ou un processus de broyage.

4. Procédé de préparation d'échantillons d'amiante selon la revendication 3, **caractérisé en ce que** l'on rajoute au récipient collecteur d'échantillons (10) au moins un organe mélangeur et / ou un organe broyeur (11), que l'on amène pendant le processus de traitement (4) dans un déplacement relatif par rapport au récipient collecteur d'échantillons (10).

5. Procédé de préparation d'échantillons d'amiante selon la revendication 4, **caractérisé en ce que** le déplacement relatif est sélectionné de sorte à obtenir un courant turbulent dans le liquide.

6. Procédé de préparation d'échantillons d'amiante selon la revendication 4 ou 5, caractérisé en ce l'on réalise le processus de traitement (4) à l'aide d'un agitateur magnétique (20), l'organe mélangeur et /ou l'organe broyeur (11) comprenant au moins un élément d'agitateur magnétique.

7. Procédé de préparation d'échantillons d'amiante selon la revendication 6, **caractérisé en ce que** la surface de l'au moins un élément d'agitateur magnétique comprend du métal, notamment un alliage métallique, de préférence de l'acier.

8. Procédé de préparation d'échantillons d'amiante selon la revendication 6 ou 7, **caractérisé en ce que** l'au moins un élément d'agitateur magnétique comprend au moins une bille, de préférence au moins deux billes.

9. Procédé de préparation d'échantillons d'amiante selon l'une quelconque des revendications 6 à 8, **caractérisé en ce que** pendant le processus de traitement (4), le récipient collecteur d'échantillons (10) est placé de manière excentrique par rapport à un centre de rotation de l'agitateur magnétique (20).

10. Procédé de préparation d'échantillons d'amiante selon la revendication 9, **caractérisé en ce que** l'agitateur magnétique (20) comprend un aimant (21), lequel tourne autour de l'axe de rotation, l'aimant (21) et le récipient collecteur d'échantillons (10) étant placés l'un par rapport à l'autre de telle sorte que pendant la rotation de l'aimant (21), un centre du récipient collecteur d'échantillons (10) se situe à l'extérieur d'un milieu entre un pôle nord (21b) et un pôle sud (21a) de l'aimant (21).

11. Procédé de préparation d'échantillons d'amiante selon l'une quelconque des revendications 1 à 10, **caractérisé en ce que** le récipient collecteur d'échantillons (10) comporte un fond inférieur curviligne ou un fond inférieur conique.

12. Procédé de préparation d'échantillons d'amiante selon l'une quelconque des revendications 1 à 11, **caractérisé en ce que** l'on mélange l'échantillon de matière première (13) dans le récipient collecteur d'échantillons (10) avec un volume minimal du liquide, de telle sorte que dans la position de repos debout du récipient collecteur d'échantillons (10), l'échantillon de matière première (13) soit recouvert avec le liquide.

13. Procédé de préparation d'échantillons d'amiante selon l'une quelconque des revendications 1 à 12, caractérisé en ce le liquide comprend un composant résolvant de matrice.

14. Procédé de préparation d'échantillons d'amiante selon l'une quelconque des revendications 1 à 13, **caractérisé en ce que** le liquide comprend un composant diminuant la tension superficielle.
